# EUROPEAN PATENT SPECIFICATION

(11) **EP 2 787 232 B1**
(45) Date of publication and mention of the grant of the patent: **09.05.2018**
(21) Application number: 14162549.1
(22) Date of filing: 31.03.2014
(51) Int. Cl.: F16C 33/66, F16C 19/28, F16C 33/46, F16C 33/49, F16C 33/48

(54) **Prong type cage for double row roller bearing and double row roller bearing**
Kammkäfig für ein zweireihiges Wälzlager und zweireihiges Wälzlager
Cage de type peigne pour roulement à rouleaux à double rangée et ledit roulement

(30) Priority: 03.04.2013 JP 2013077590; 03.04.2013 JP 2013077598; 21.05.2013 JP 2013106850
(43) Date of publication of application: 08.10.2014
(73) Proprietor: JTEKT Corporation, Osaka-shi, Osaka 542-8502 (JP)
(72) Inventor: Honjo, Hayaki, Osaka-shi, Osaka 542-8502 (JP)
(74) Representative: Winter, Brandl, Fürniss, Hübner, Röss, Kaiser, Polte - Partnerschaft mbB

(56) References cited:
- DE-B- 1 072 433
- FR-A1- 2 588 927
- JP-A- 2001 208 075
- JP-A- 2007 298 080

## Description

### BACKGROUND OF THE INVENTION

### 1. Field of the Invention

The invention relates to a prong type cage incorporated in a double row roller bearing, and a double row roller bearing including a prong type cage.

### 2. Description of Related Art

A bearing portion by which a main spindle is rotatably supported in a machine toll is required to have a high degree of stiffness for the purpose of maintaining a high degree of machining accuracy. Thus, a double row roller bearing is used. Further, in recent years, because there has been a demand for speedup of rotation of a main spindle, a double row roller bearing capable of withstanding high-speed rotation has been required.

From document FR2588927A1 a double row roller bearing with window cages with an inner ring, an outer ring and a plurality of rollers has become known.

A double row roller bearing includes an inner ring, an outer ring, and a plurality of rollers ananged in two rows between the inner ring and the outer ring. For example, Japanese Patent Application Publication No. 2012-102796 (JP 2012-102796 A) (refer to FIG. 3) describes a double row roller bearing including independent cages each of which holds a plurality of rollers ananged in a conesponding one of the two rows. That is, the double row roller bearing includes two cages. Each of the cages has an annular portion and a plurality of cage bars. The cage bars extend in the axial direction of the cage from one side face of the annular portion, and are located at intervals in the circumferential direction of the cage. The cages are formed in a comb-shape. Pockets in which the rollers are held are defined between the cage bars that are adjacent to each other in the circumferential direction.

Further embodiments of double row roller bearings are disclosed in the documents JP 2001 20075 A and DE 10 72 433 B.

Because a prong type cage has a cantilever structure in which cage bars are projected from an annular portion in the axial direction, distal end portions of the cage bars are deformable to some extent. Thus, for example, even if rolling of rollers fails to keep up with the rotation of a double row roller bearing and thus tensile force and compression force repeatedly act on the cage bars, these forces are relieved. Therefore, the cages are less prone to damages. On the other hand, in a window-type cage in which paired annular portions are connected to each other via cage bars, the cage bars are fixed to the annular portions located on the respective sides of the cage bars, and thus deformation of the cage bars is restricted. Thus, if tensile force and compression force repeatedly act on the cage bars, these forces are not easily relieved. Therefore, the window-type cage is more susceptible to damages than the prong type cage is.

In some cases, a main spindle of a machine tool is rotated at a high speed and the speed of rotation of the main spindle is abruptly changed (abruptly accelerated). In these cases, the rotational speed of a double row roller bearing that supports the main spindle and the rotational speed of cages are also abruptly changed (abruptly accelerated). Grease is provided in the double row roller bearing in order to maintain the lubrication performance of the double row roller bearing. The grease adheres to and is thus retained in the cages as well. If the rotational speed is abruptly changed, the grease retained in the cages may be splattered. For example, the grease is forced out of the cages outward in the axial direction, and, as a result, a grease shortage may occur at an early stage. A grease shortage may cause seizure or damages of the double row roller bearing, which reduces the service life (durability) of the double row roller bearing.

### SUMMARY OF THE INVENTION

One object of the invention is to provide a double row roller bearing including a prong type cage usable under a high-speed rotation and configured to reduce the occurrence of a grease shortage at an early stage.

An aspect of the invention relates to a double row roller bearing according to claim 1.

### BRIEF DESCRIPTION OF THE DRAWINGS

The foregoing and further features and advantages of the invention will become apparent from the following description of example embodiments with reference to the accompanying drawings, wherein like numerals are used to represent like elements and wherein:
FIG. 1 is a sectional view of a double row roller bearing taken along its axial direction;
FIG. 2 is a perspective view of a cage;
FIG. 3 is a view illustrating part of the cage as viewed from the axial direction of the cage;
FIG. 4 is an enlarged perspective view illustrating part of the cage;
FIG. 5 is an enlarged explanatory view illustrating a radially outer side portion of an annular portion, as viewed from the axial direction of the cage;
FIG. 6 is a view illustrating part of the paired cages and rollers in FIG. 1, as viewed from the outside in the radial direction;
FIG. 7 is a sectional view of the cage taken along the line V1-V1 in FIG. 3;
FIG. 8 is a sectional view illustrating a modified example of a protrusion;
FIG. 9 is a perspective view illustrating a modified example of the cage;
FIG. 10 is an enlarged perspective view illustrating part of the cage in FIG. 9;
FIG. 11 is a view illustrating part of the cage as viewed from the axial direction of the cage;
FIG. 12 is a sectional view of the cage taken along the line V2-V2 in FIG. 11;
FIG. 13 is an explanatory view for explaining the sectional shape (cross-sectional shape) of a first groove;
FIG. 14A is a sectional view illustrating part of the cage taken along the longitudinal direction of a second groove;
FIG. 14B is a sectional view illustrating a modified example of the second groove;
FIG. 14C is a sectional view illustrating a modified example of the cage in FIG. 7A;
FIG. 15A, FIG. 15B and FIG. 15C are explanatory views illustrating other examples of the first groove;
FIG. 16A, FIG. 16B and FIG. 16C are explanatory views illustrating other examples of the first groove;
FIG. 17 is a planar development view of another example of the cage, schematically illustrating an inner face of the cage;
FIG. 18 is a planar development view of yet another example of the cage, schematically illustrating an inner face of the cage;
FIG. 19 is a perspective view of a cage according to another embodiment of the invention; and

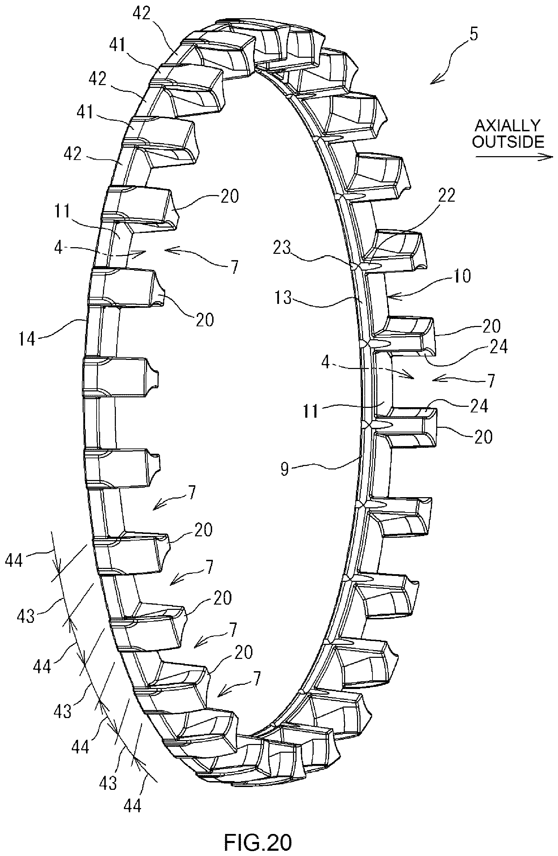

FIG. 20 is a perspective view of a cage according to yet another embodiment of the invention.

### DETAILED DESCRIPTION OF EMBODIMENTS

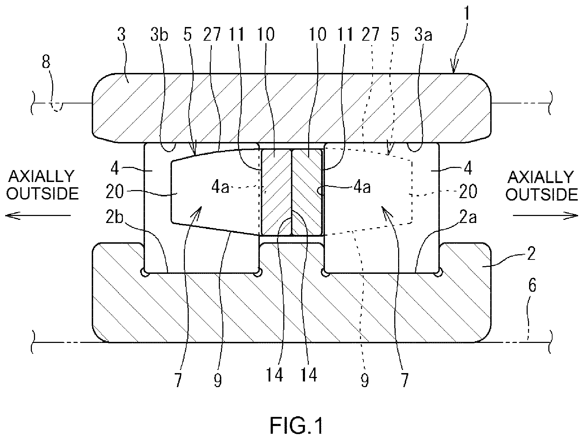

Hereinafter, embodiments of the invention will be described with reference to the accompanying drawings. FIG. 1 is a sectional view of a double row roller bearing 1 taken along its axial direction. Note that the same components in the drawings will be denoted by the same reference symbols (reference numerals), and the description of these components will not be repeated.

The double row roller bearing 1 is used as a bearing that supports a main spindle 6 of a machine tool such as a general purpose lathe, a CNC lathe, a machining center or a milling machine. The double row roller bearing 1 is capable of supporting the main spindle 6 rotated at a high speed, with a high degree of stiffness. The main spindle 6 has a diameter of, for example, approximately 50 to 150 mm, and the maximum rotational speed of the main spindle 6 is in a range from 10,000 to 15,000 rpm. The main spindle 6 may be rotated at a low speed, or at a high speed. The rotational speed of the main spindle 6, which has been rotated at a low rotational speed or which has been at a standstill, may be abruptly increased to a high rotational speed (maximum rotational speed).

The double row roller bearing 1 in the present embodiment includes an inner ring 2, an outer ring 3, a plurality of rollers 4, and annular cages 5. The rollers 4 are disposed between the inner ring 2 and the outer ring 3. The cages 5 hold the rollers 4. The rollers 4 are arranged in two rows. Each of the cages 5 holds the rollers 4 arranged in a corresponding one of the two rows. The cages 5 hold the rollers 4 independently from each other. That is, two independent cages 5 are incorporated in the double row roller bearing 1. Each of the rollers 4 has a cylindrical outer peripheral face, in other words, the double row roller bearing 1 is a double row cylindrical roller bearing.

Raceway surfaces 2a, 2b, on which the rollers 4 arranged in two rows roll, are formed on the outer peripheral face of the inner ring 2. Raceway surfaces 3a, 3b, on which the rollers 4 arranged in two rows roll, are formed in parts of the inner peripheral face of the outer ring 3. The outer ring 3 is fitted to the inner peripheral face of a bearing housing 8 of the machine tool. The main spindle 6 is passed through the inner ring 2. The double row roller bearing 1 is lubricated with grease, and the grease adheres to the inner ring 2, the outer ring 3, the rollers 4 and the cages 5.

The cage 5 for the rollers 4 arranged in one of the two rows and the cage 5 for the rollers 4 arranged in the other one of the two rows are the same except for the directions in which the cages 5 are fitted to the double row roller bearing 1. The cages 5 are arranged next to each other in the axial direction and incorporated in the double row roller bearing 1. The cages 5 are arranged such that a front side (one side face) 11 of each of the cages 5, which faces the axial direction of the cage 5, is oriented outward in the axial direction of the double row roller bearing 1, and thus annular back sides (the other side faces) 14 of the cages 5, which are opposed to each other, are allowed to contact each other. The cages 5 are rotatable independently from each other, and each of the cages 5 are rotatable together with the rollers 4 arranged in a corresponding one of the two rows.

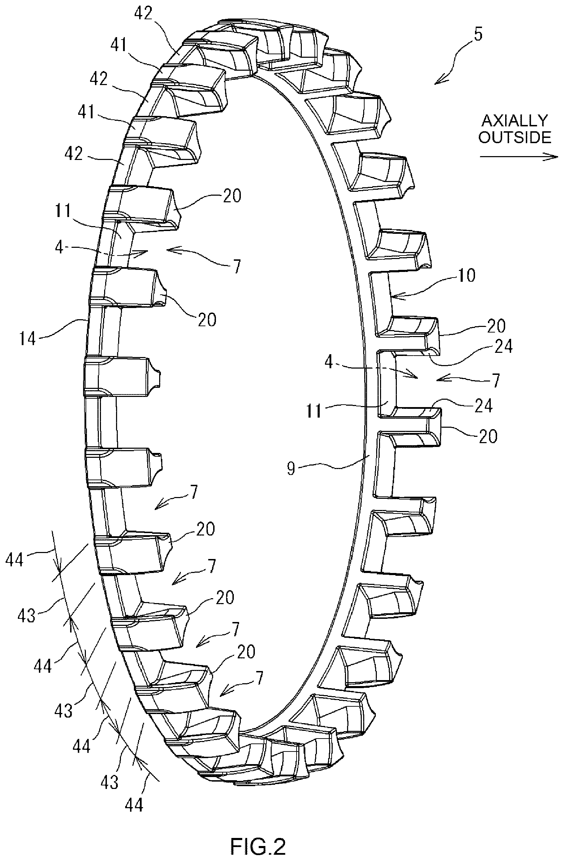

FIG. 2 is a perspective view illustrating the cage 5 (the cage 5 on the right side in FIG. 1). The cage 5 is a prong type cage, and has an annular portion 10 and a plurality of cage bars 20. The cage bars 20 are arranged at intervals (at equal intervals) in the circumferential direction. The cage bars 20 are formed so as to extend in the axial direction from the front side 11 of the annular portion 10. Thus, the cage bars 20 are formed in a cantilever-shape so as to be projected from the annular portion 10. Note that the opposite side (the other side) of the cage 5 from the front side 11 in the axial direction is the back side 14. The back side 14 of each cage 5 is an annular smooth face, and serves as a mating face that is allowed to contact the back side 14 of the other cage 5 arranged next to the aforementioned cage 5 in the axial direction. Because the two cages 5 (refer to FIG. 1) are rotatable independently from each other, the back side (the other side face) 14 of the annular portion 10 of one of the two cages 5 (one cage 5) serves as a sliding contact face that is brought into sliding contact with the back side (the other side face) 14 of the annular portion 10 of the other one of the cages 5 (the other cage 5). The back side (the other side face) 14 of the annular portion 10 of the other cage 5 serves as a sliding contact face that is brought into sliding contact with the back side (the other side face) 14 of the one cage 5.

The cage 5 is made of resin (synthetic resin), and is formed by injection-molding. The annular portion 10 and the cage bars 20 are molded integrally with each other. The cage 5 may be made of a material such as polyether ether ketone (PEEK) or polyamide.

The cage bars 20 are arranged at equal intervals in the circumferential direction. Pockets 7 in which the rollers 4 are held are defined at positions on the side of the front side 11 of the annular portion 10 and between the cage bars 20 that are adjacent to each other in the circumferential direction. That is, each of the pockets 7 is a space that is surrounded by opposed faces 24 of the cage bars 20 arranged adjacent to each other in the circumferential direction and the front side 11 of the annular portion 10. The pockets 7 are opened outward in the axial direction, and thus the cage 5 has a comb-shape as a whole.

The annular portion 10 is formed of a plurality of first circular arc portions 43 and a plurality of second circular arc portions 44. The first circular arc portions 43 are connected to the cage bars 20. Each second circular arc portion 44 is located between the first circular arc portions 43 that are adjacent to each other in the circumferential direction. The first circular arc portions 43 and the second circular arc portions 44 are alternately arranged along the circumferential direction of the annular portion 10. The annular portion 10 is a ring-shaped portion formed of the first circular arc portions 43 and the second circular arc portions 44 that are integrated with each other. The first circular arc portions 43 are located adjacent to the cage bars 20 in the axial direction. The second circular arc portions 44 are located adjacent to the pockets 7 in the axial direction.

In the present embodiment, when the outer ring 3 and the cage 5 are rotated relative to each other, parts (protrusion 41, described later) of an outer peripheral face of the annular portion 10 are guided along the inner peripheral face of the outer ring 3, and thus the cage 5 is positioned in the radial direction (outer ring guide).

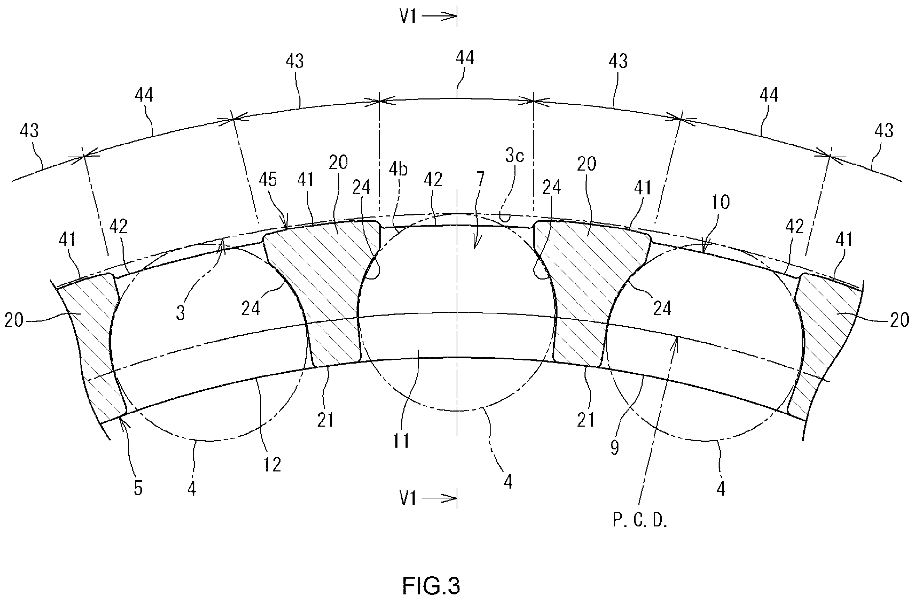

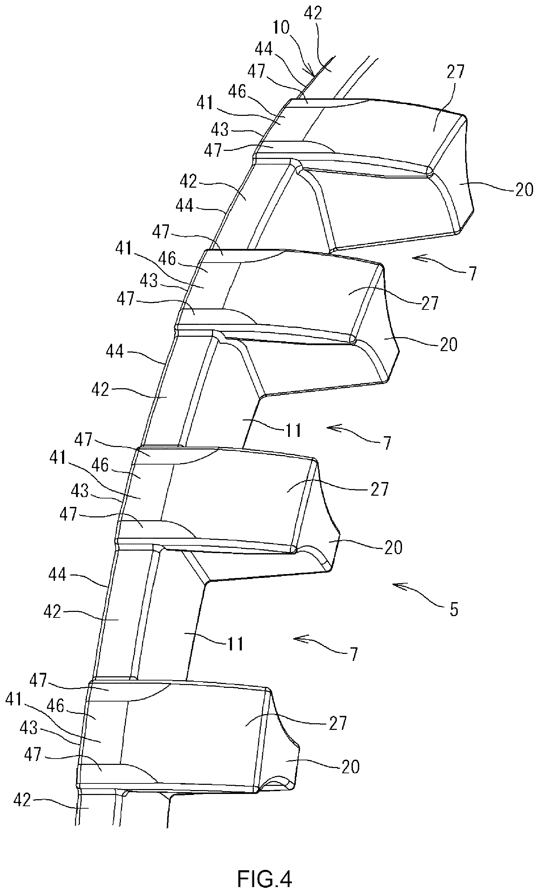

FIG. 3 is a view illustrating part of the cage 5 as viewed from the axial direction of the cage 5. Note that the cage bars 20 are illustrated in sections. FIG. 4 is an enlarged perspective view illustrating part of the cage 5. The protrusions 41 and recessed portions 42 are formed on the outer periphery of the annular portion 10 of the cage 5 so as to alternate along the circumferential direction of the annular portion 10. The protrusions 41 are parts of a radially outer side portion of the annular portion 10, and have a radial size larger than that of the recessed portions 42. The recessed portions 42 are parts of the radially outer side portion of the annular portion 10, and have a radial size smaller than that of the protrusions 41.

As described above, the annular portion 10 is formed of the first circular arc portions 43 connected to the cage bars 20, and the second circular arc portions 44 each of which is present between a pair of the first circular arc portions 43 that are adjacent to each other in the circumferential direction. In the present embodiment, the protrusions 41 are formed on the outer peripheral sides of the first circular arc portions 43, and the recessed portions 42 are formed on the outer peripheral sides of the second circular arc portions 44. Thus, the cage 5 is configured such that the protrusions 41 are formed at the same intervals as those of the cage bars 20 in the circumferential direction. All the protrusions 41 have the same shape. All the recessed portions 42 have the same shape. Each of the recessed portions 42 is formed so as to be adjacent to a corresponding one of the protrusions 41.

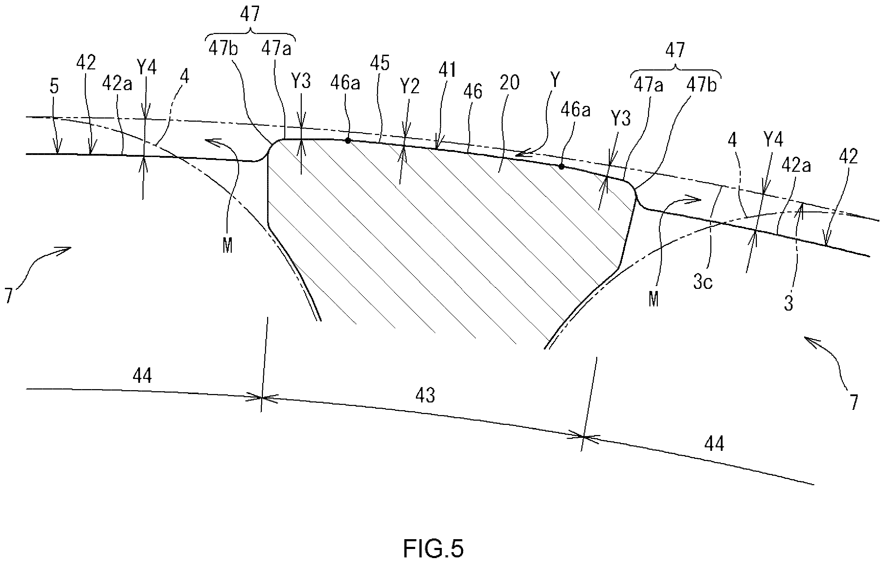

FIG. 5 is an enlarged explanatory view illustrating a radially outer side portion of the annular portion 10, as viewed from the axial direction of the cage 5. Each protrusion 41 is opposed to the inner peripheral face 3c of the outer ring 3 across a clearance Y. The protrusions 41 are portions that are guided by the inner peripheral face 3c of the outer ring 3 when the cage 5 is rotated. A radially outer face 45 of the protrusion 41 has a circular arc face 46 and small-diameter faces 47 that are formed on the opposite sides of the circular arc face 46 in the circumferential direction. A radial clearance Y2 formed between the circular arc face 46 and the inner peripheral face 3c is uniform along the circumferential direction. On the circular arc face 46, the radial clearance Y2 between the circular arc face 46 and the inner peripheral face 3c is uniform along the axial direction as well. The small-diameter faces 47 are surfaces that are respectively extended in the circumferentially opposite directions from opposite end portions 46a of the circular arc face 46. Each of the small-diameter faces 47 is a surface formed such that a radial clearance Y3 between the small-diameter face 47 and the inner peripheral face 3c of the outer ring 3 increases along a direction in which the small-diameter face 47 extends.

Each small-diameter face 47 in the present embodiment is formed of a flat face 47a and a rounded face 47b. The flat face 47a is extended from one of the end portions 46a of the circular arc face 46. The rounded face 47b is formed at the boundary between the flat face 47a and a corresponding one of the recessed portions 42. The small-diameter face 47 may have any configurations other than the configuration described above. For example, a circular arc face, or a rounded face may be employed instead of the flat face 47a. Alternatively, a composite face formed by combining a circular arc face or a rounded face with an inclined face may be employed. Further alternatively, the entirety of the small-diameter face 47 may be a circular arc face, a rounded face or an inclined face.

In the cage 5 in the present embodiment, the grease is retained at positions on the outer periphery of the annular portion 10 and between the protrusions 41 that are adjacent to each other in the circumferential direction. That is, the grease is retained in the recessed portions 42 defined between the protrusions 41 that are adjacent to each other in the circumferential direction, at positions between the outer periphery of the annular portion 10 and the inner peripheral face 3c of the outer ring 3. An outer peripheral face (bottom face) 42a of each of the recessed portions 42 is a circular arc face that is opposed to the inner peripheral face 3c of the outer ring 3 across a radial clearance (clearance Y4). The clearance (clearance Y4) is uniform along the circumferential direction, and is larger than the radial clearance Y (clearances Y2, Y3) between the protrusion 41 and the inner peripheral face 3c. The grease is reserved in a region M in which the clearance Y4 is defined.

The second circular arc portion 44 in which the recessed portion 42 is formed is located adjacent to a corresponding one of the associated pockets 7 in the axial direction. Thus, when a space that defines the clearance Y4 in the recessed portion 42 is viewed from the axial direction, part of the roller 4 retained in the pocket 7, the part being projected radially outward from the outer peripheral face (bottom face) 42a of the recessed portion 42, serves as a wall (refer to FIG. 3 and FIG. 5) for restraining the grease retained in the recessed portion 42 from flowing out of the recessed portion 42 in the axial direction.

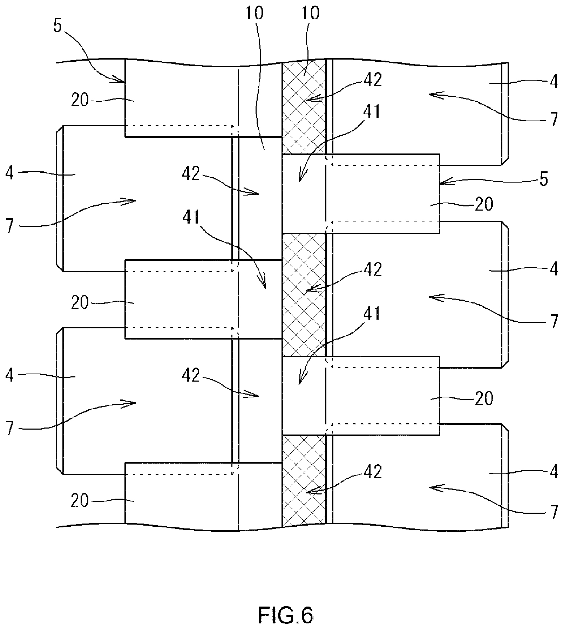

FIG. 6 is a view illustrating part of the paired cages 5 and the rollers 4 in FIG. 1, as viewed from the outside in the radial direction. As described above, the cages 5 are rotatable independently from each other. Thus, as illustrated in FIG. 6, the cages 5 may be rotated in a state where the recessed portions 42 of one cage 5 (on the right side in FIG. 6) are aligned with the protrusions 41 of the other cage 5 (on the left side in FIG. 6) in the axial direction. In this case, each recessed portion 42 (crosshatched part in FIG. 6) of the cage 5 on the right side in FIG. 6 is surrounded by the roller 4 retained in the pocket 7 of the cage 5 and the protrusions 41 on the opposite sides of the recessed portion 42 in the circumferential direction, and the protrusion 41 of the cage 5 on the left side in FIG. 6. The grease retained in the recessed portion 42 of the cage 5 on the right side in FIG. 6 is restrained from flowing in the axial direction, and does not easily flow out of the recessed portion 42. That is, it is possible to restrain the grease retained in the recessed portion 42 from being splattered outward in the axial direction.

Although not illustrated, even when the recessed portions 42 of one cage 5 and the recessed portions 42 of the other cage 5 are aligned with each other in the axial direction, each of the recessed portions 42 of the cages 5 is surrounded by the rollers 4 that are retained in the pockets 7 of the cages 5 and that are on the opposite sides of the recessed portion 42 in the axial direction, and the protrusions 41 on the opposite sides of the recessed portion 42 in the circumferential direction. The grease retained in the recessed portions 42 is restrained from flowing in the axial direction, and does not easily flow out of the recessed portions 42.

In the cage 5 configured as described above, the multiple protrusions 41, which are opposed to the inner peripheral face 3c of the outer ring 3 across the clearance Y (refer to FIG. 5) and which are guided by the inner peripheral face 3c, are formed on the outer periphery of the annular portion 10 at intervals in the circumferential direction. Thus, the prong type cage 5 is positioned in the radial direction by the protrusions 41, and rotated. The multiple recessed portions 42 for retaining the grease in cooperation with the inner peripheral face 3c of the outer ring 3 are formed on the outer periphery of the annular portion 10. The grease is supplied from the recessed portions 42 into spaces between the protrusions 41 and the inner peripheral face 3c of the outer ring 3 through relative rotation between the prong type cage 5 and the outer ring 3. Thus, a rotational resistance between the cage 5 and the outer ring 3 is reduced. As a result, it is possible to use the prong type cage 5 under a high-speed rotation. Because the grease is retained in the recessed portions 42, it is possible to reduce the occurrence of a shortage of the grease at an early stage in the double row roller bearing 1. Thus, it is possible to prevent reduction in the service life of the double row roller bearing 1 due to a shortage of the grease.

In the present embodiment, each recessed portion 42 is formed on the outer peripheral side of a corresponding one of the second circular arc portions 44, which is located adjacent in the axial direction to the pocket 7, in which the roller 4 is held. Thus, the grease retained in the recessed portion 42 is also supplied toward the roller 4 held in the pocket 7. The grease contributes to the lubrication of the rollers 4 and the outer ring 3.

The recessed portions 42 in which the grease is reserved are formed adjacent to the protrusions 41 in the circumferential direction (rotational direction). Moreover, the radially outer face 45 (refer to FIG. 5) of each protrusion 41 has, in addition to the circular arc face 46, the small-diameter faces 47 that are extended in the circumferential direction from the circumferentially opposite end portions 46a of the circular arc face 46, and that are formed such that the radial clearance Y3 between each small-diameter face 47 and the inner peripheral face 3c of the outer ring 3 increases along the direction in which the small-diameter face 47 extends. In the radially outer face 45, the circular arc face 46 has a shape that conforms to the inner peripheral face 3c of the outer ring 3. Thus, the cage 5 is stably guided by the outer ring 3. When the outer ring 3 and the cage 5 are rotated relative to each other, the grease retained in the recessed portions 42 is easily moved onto the protrusions 41 that are adjacent to the recessed portions 42 in the circumferential direction (rotational direction) along the small-diameter faces 47. The grease is supplied into the space between the circular arc faces 46 of the protrusions 41 and the inner peripheral face 3c of the outer ring 3. As a result, the small-diameter faces 47 contribute to reduction of the rotating resistance between the cage 5 (protrusions 41) and the outer ring 3.

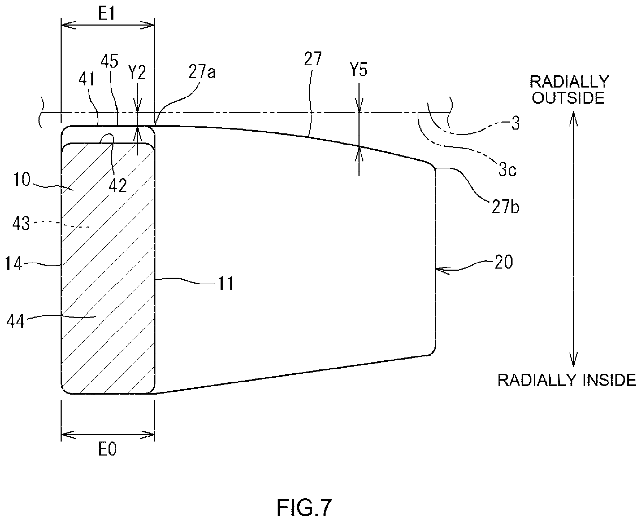

In the present embodiment, as illustrated in FIG. 7, the first circular arc portion 43, on which the protrusion 41 is formed, and the second circular arc portion 44, on which the recessed portion 42 is formed, have the same axial length E0. The protrusion 41 has an axial length E1 that is equal to the axial length E0 of the first circular arc portion 43. That is, the axial length E1 of the protrusion 41 is equal to the axial length E0 of the annular portion 10. FIG. 7 is a sectional view of the cage 5 taken along the line V1-V1 in FIG. 3. The bottom face of the recessed portion 42 is extended over the entire axial length of the second circular arc portion 44. That is, the axial length of the recessed portion 42 is equal to the axial length E0 of the annular portion 10.

In the present embodiment, the radially outer face 45 of each of the protrusions 41 and the radially outer face 27 of a corresponding one of the cage bars 20 are smoothly contiguous to each other so as to define a single face (smoothly curved face). The radially outer face 27 of the cage bar 20 is opposed to the inner peripheral face 3c of the outer ring 3 across a radial clearance. At a base portion 27a (refer to FIG. 7) of the radially outer face 27 as well as at the circular arc face 46 of each of the protrusions 41 (refer to FIG. 5), the radial clearance Y2 between the base portion 27a and the inner peripheral face 3c of the outer ring 3 is uniform along the circumferential direction. The radially outer face 27 is a surface formed such that a radial clearance Y5 increases along a direction from the base portion 27a to a distal end portion 27b of the cage bar 20.

Therefore, a part of the cage bar 20, which includes the base portion 27a of the radially outer face 27, may be regarded as a part of the protrusion 41. In this case, the axial length E1 of the protrusion 41 is larger than the axial length E0 of the annular portion 10. That is, the axial length E1 of the protrusion 41 needs to be equal to or larger than the axial length E0 of the annular portion 10.

As described above, the protrusion 41 is present between the recessed portions 42 that are adjacent to each other in the circumferential direction. The axial length E1 of the protrusion 41 is equal to or larger than the axial length E0 of the annular portion 10. Thus, the protrusion 41 serves as a wall that restrains the grease retained in the recessed portion 42 from flowing into another recessed portion 42 that is located adjacent to the recessed portion 42 across the protrusion 41. As a result, it is possible to enhance the function of retaining the grease in the recessed portions 42.

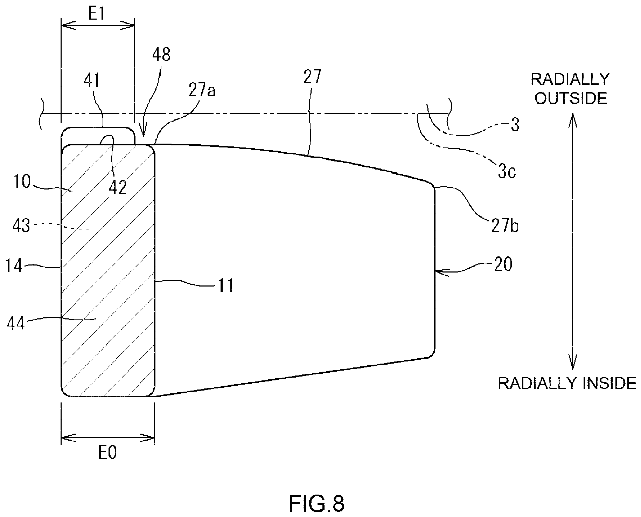

FIG. 8 is a sectional view illustrating a modified example of the protrusion 41. In the modified example, the axial length E1 of the protrusion 41 is less than the axial length E0 of the annular portion 10. In this case, a passage 48, which extends continuously in the circumferential direction so as to provide communication between the recessed portions 42 adjacent to each other in the circumferential direction, is formed at a position adjacent to the protrusion 41 in the axial direction and on the outer periphery of the annular portion 10 (first circular arc portion 43). In this case, as the outer ring 3 and the cage 5 are rotated relative to each other, the grease retained in one of the recessed portions 42 flows through the passage 48 into another recessed portion 42, which is located adjacent to the one recessed portion 42 in the circumferential direction. The grease that has passed through the passage 48 is forced into the adjacent recessed portion 42 from the one side face 11-side. Thus, there is a possibility that the grease retained in this recessed portion 42 will be forced out in the axial direction from the back side 14-side. Therefore, the function of retaining the grease in the recessed portions 42 is higher in the case where the axial length E1 of the protrusion 41 is equal to or larger than the axial length E0 of the annular portion 10 (the example illustrated in FIG. 7) than in the case where the axial length E1 is less than the axial length E0.

In the double row roller bearing 1, in some cases, "window-type cages" (not illustrated) each having a configuration in which paired annular portions are connected to each other via cage bars are used instead of the prong type cages 5 in the present embodiment. In the window-type cage, the spaces in which rollers are disposed are closed spaces each surrounded by a pair of annular portions and an outer ring (and an inner ring). Thus, the grease is restrained from flowing and trapped in the closed space, and therefore the stirring resistance of the grease increases. As a result, if the window-type cages are used under a high-speed rotation, heat generation may occur. In contrast to this, each of the prong type cages 5 (refer to FIG. 1) according to the present embodiment has a single annular portion 10, so that no annular portion is present on the axially outer side in the double row roller bearing 1. Thus, the spaces in which the rollers 4 are disposed are not closed, unlike in the window-type cage, but are opened outward in the axial direction. Thus, the stirring resistance of the grease is restrained from being increased. As a result, it is possible to suppress heat generation even if the prong type cage 5 is used under a high-speed rotation.

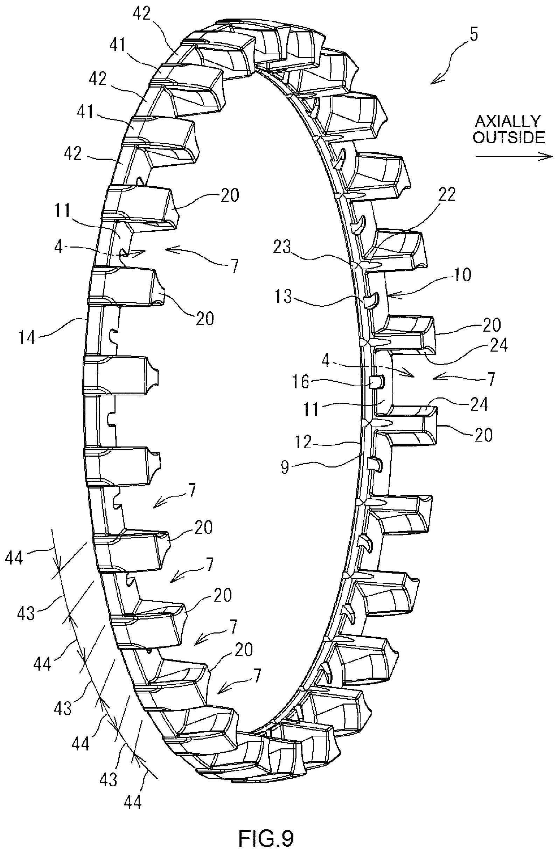

FIG. 9 is a perspective view illustrating a modified example of the prong type cage 5. The cage 5 illustrated in FIG. 9 differs from the cage 5 illustrated in FIG. 2 in view of the following points: The cage 5 illustrated in FIG. 9 is capable of retaining the grease retained in the spaces between the cage 5 and end faces 4a (refer to FIG. 1) of the rollers 4. In addition, the cage 5 has the function of supplying the retained grease into the spaces (pockets 7) between the cage 5 and the end faces 4a of the rollers 4. Note that the cage 5 illustrated in FIG. 2 and the cage 5 illustrated in FIG. 9 are the same in the other configurations, and description of the common configurations between the cage 5 illustrated in FIG. 2 and the cage 5 illustrated in FIG. 9 will be omitted. The configuration for producing the above-stated function will be described below.

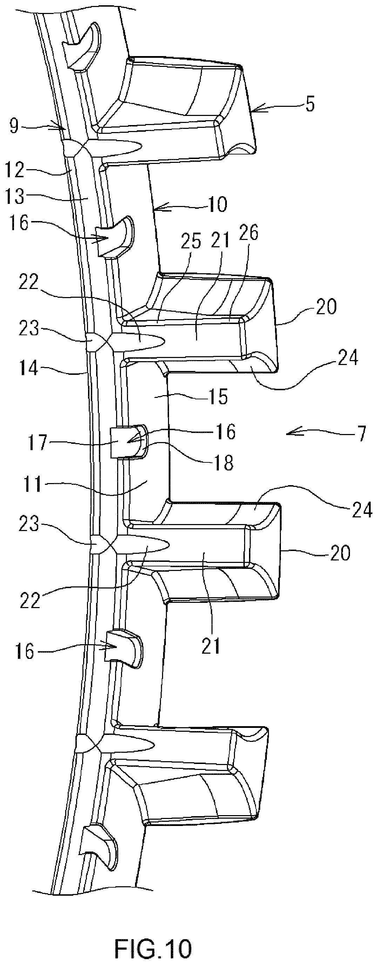

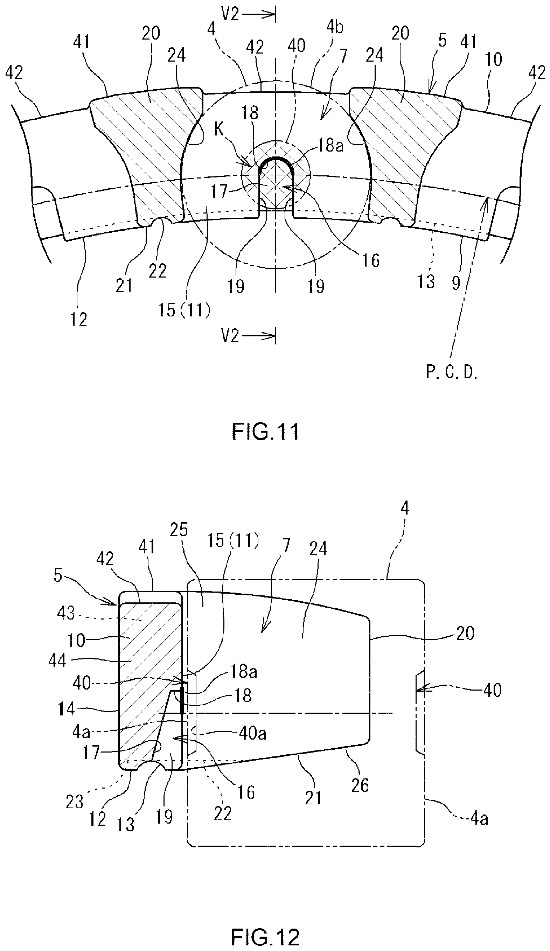

FIG. 10 is an enlarged perspective view illustrating part of the cage 5 in FIG. 9. FIG. 11 is a view illustrating part of the cage 5 as viewed from the axial direction of the cage 5. FIG. 12 is a sectional view of the cage 5 taken along the line V2-V2 in FIG. 11. In the annular portion 10 of the cage 5, recesses 16 are formed in a face 15 opposed to the end faces 4a (refer to FIG. 12) of the rollers 4 disposed in the pockets 7. Each recess 16 is opened toward the end face 4a of the roller 4 so as to retain the grease between the recess 16 and the end face 4a of the roller 4. The face 15 in which the recesses 16 are formed is the front side 11, which define the pockets 7. Further, each recess 16 is also opened at the inner peripheral face 12 of the annular portion 10 in order to introduce the grease that is present on the inner peripheral face 12 of the annular portion 10 into the recess 16.

Each recess 16 has a bottom face 17 opposed to the end face 4a of the corresponding roller 4, an outer wall face 18 that extends from a radially outer side portion of the bottom face 17 toward the end face 4a of the roller 4, and a pair of side wall faces 19 that extend from circumferentially opposite side portions of the bottom face 17 toward the end face 4a. The grease is stored in a space surrounded by the bottom face 17, the outer wall face 18 and the side wall faces 19 so as to be retained between the recess 16 and the end face 4a of the roller 4. In a complete assembly state in which the cages 5 are incorporated in the double row roller bearing 1, the front side 11 (the face 15) is opposed to the end face 4a of each roller 4 across a clearance (refer to FIG. 5).

The bottom face 17 of the recess 16 is a face that approaches the end face 4a of the roller 4 in a direction from the radially inside toward the radially outside, as illustrated in FIG. 12. In the present embodiment, the bottom face 17 is an inclined face that approaches the end face 4a in a direction from the inner peripheral face 12 (a first groove 13 (described later) formed in the inner peripheral face 12) of the annular portion 10 toward the radially outside.

The outer wall face 18 formed at a radially outer side portion of the recess 16 meets the front side 11 of the annular portion 10. In the present embodiment, the outer wall face 18 is orthogonal to the front side 11. As illustrated in FIG. 11, the outer wall face 18 is formed as a circular arc face (semicircular arc face). The circular arc face has a center that is coincident with the central axis of the roller 4. In FIG. 11 and FIG. 12, the circular arc contour (contour on the opening side) of the outer wall face 18 is indicated by a bold line. That is, the portion indicated by the bold line is the outer wall face 18.

As illustrated in FIG. 12, a dent 40 is formed at the center of the end face 4a of each roller 4, for the convenience of production of the roller 4. It is preferable to avoid, as much as possible, the situation where an opening edge of the recess 16 is brought into sliding contact with the end face 4a of the roller 4. Thus, in the cage 5 in the present embodiment, an opening edge 18a (a bold line portion in FIG. 11 and FIG. 12) of the outer wall face 18 of the recess 16 is located within a region of the front side 11 (face 15), which faces the dent 40. In FIG. 11, a reference character K denotes the region, that is, the crosshatched region K.

With the configuration described above, the opening edge 18a of the outer wall face 18 of the recess 16 is opposed to a bottom face 40a of the dent 40 (refer to FIG. 12), and thus it is possible to prevent the opening edge 18a from coming into sliding contact with the end face 4a of the roller 4. Thus, it is possible to reduce the range in which the opening edge 18a of the recess 16 is brought into contact with the end face 4a of the roller 4.

Further, as illustrated in FIG. 10, in order to allow the cage 5 to effectively exhibit the above-described function (the function of retaining the grease and supplying the grease into the spaces between the cage 5 and the end faces 4a of the rollers 4), a groove (first groove) 13 is formed in the inner peripheral face 12 of the annular portion 10 so as to extend in the circumferential direction (i.e., the longitudinal direction of the first groove 13 coincides with the circumferential direction). Further, the first groove 13 is communicated with the recesses 16. That is, part of each of the recesses 16 is opened into the first groove 13. In the present embodiment, the first groove 13 is a groove that extends continuously in the circumferential direction. In the present embodiment, as illustrated in FIG. 10, in addition to the first groove 13, second grooves 22 and third grooves 23 are formed in a cage inner face 9 of the cage 5.

As described above, the grooves (13, 22, 23) in which the grease is retained are formed in parts of the cage inner face 9 that includes the inner peripheral face 12 of the annular portion 10 and radially inner faces 21 of the cage bars 20. Thus, the cage 5 is able to retain the grease in a manner such that a large amount of grease does not splatter even if the main spindle 6 is abruptly accelerated. Further, the cage 5 has the function of gradually supplying the retained grease into the spaces (pockets 7) between the cage 5 and the rollers 4 and into a space defined between the cage 5 and the other cage 5 arranged next to the former cage 5 (between the back sides 14) as the cage 5 rotates.

The first groove 13 is a groove that is formed in the inner peripheral face 12 of the annular portion 10 and that extends in the circumferential direction (the longitudinal direction of the first groove 13 coincides with the circumferential direction). In the present embodiment, the first groove 13 is a groove that continuously extends in the circumferential direction. The first groove 13 is opened radially inward. The grease can be retained and held in the first groove 13. That is, even if a centrifugal force is exerted on the grease in the first groove 13 under the rotation of the cage 5, the grease is retained in the first groove 13.

As illustrated in FIG. 10, the second grooves 22 are formed in the radially inner faces 21 of the cage bars 20. Each of the second grooves 22 is a groove that extends in the direction in which a corresponding one of the cage bars 20 extends (the direction parallel to the central axis of the cage 5) (the longitudinal direction of each second groove 22 coincides with the direction in which a corresponding one of the cage bars 20 extends). The second grooves 22 are formed in the respective cage bars 20, and are communicated with the first groove 13. Each of the second grooves 22 is not extended up to a distal end portion 26 of the corresponding cage bar 20, but is extended up to a base portion 25 of the corresponding cage bar 20. The second grooves 22 introduce the grease retained in the first groove 13 to the radially inner faces 21 of the cage bars 20.

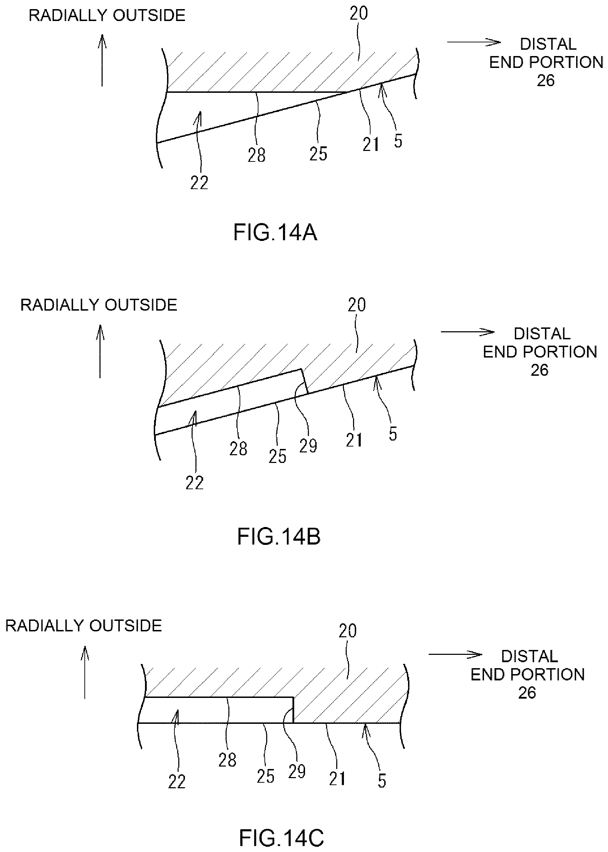

FIG. 14A is a sectional view illustrating part of the cage 5 taken along the longitudinal direction of the second groove 22. In the present embodiment, each radially inner face 21 of the cage bar 20 is an inclined face that is inclined radially outward in a direction toward the distal end portion 26 of the cage bar 20 (the distance between a straight line parallel to the axial direction of the cage 5 and the radially inner face 21 increases in a direction toward the distal end portion 26 of the cage bar 20). On the other hand, the second groove 22 (a groove bottom portion 28 of the second groove 22) is formed along a straight line that is parallel to the central axis of the cage 5. Thus, as illustrated in FIG. 14A, the depth of the second groove 22 becomes gradually shallower in the direction toward the distal end portion 26 of the cage bar 20, and finally the groove bottom portion 28 meets the radially inner face 21. The second groove 22 is formed as a groove that is extended up to the base portion 25 of the cage bar 20, and disappears at the base portion 25.

FIG. 14B is a sectional view illustrating a modified example of the second groove 22. A groove bottom portion 28 of a second groove 22 is parallel to the radially inner face 21 that is an inclined face. The second groove 22 has a wall face 29 that meets (is orthogonal to) the radially inner face 21, at its distal groove end. With the formation of the wall face 29, a stepped portion is formed by the groove bottom portion 28 and the radially inner face 21. The second groove 22 has an enhanced function of retaining the grease. That is, even if the grease retained in the second groove 22 attempts to flow toward the distal end portion 26 of the cage bar 20, the flow of the grease is blocked by the wall face 29.

FIG. 14C is a sectional view illustrating a modified example of the cage 5 in FIG. 14A. A radially inner face 21 of a cage bar 20 of a cage 5 is a face that is parallel to the central axis of the cage 5, that is, the radially inner face 21 is not an inclined face. A second groove 22 illustrated in FIG. 14C, as well as the second groove 22 illustrated in FIG. 14B, has a wall face 29 that meets (is orthogonal to) the radially inner face 21, at its distal groove end. That is, the second groove 22 illustrated in FIG. 14C has an enhanced function of retaining the grease.

As illustrated in FIG. 10, with the formation of the second grooves 22 and the first groove 13, the grease is retained in the first groove 13 formed in the inner peripheral face 12 of the annular portion 10. Further, the grease is introduced onto the radially inner faces 21 of the cage bars 20 through the second grooves 22 as the cage 5 rotates. The thus introduced grease is supplied into the spaces (pockets 7) between the cage bars 20 and the outer peripheral faces 4b of the rollers 4 disposed adjacent to the cage bars 20 in the circumferential direction, thus contributing to the lubrication of the double row roller bearing 1.

If the second grooves 22 are formed so as to be extended up to the distal end portions 26 of the cage bars 20, there is a possibility that the grease that is introduced into the second grooves 22 and then flows in the axial direction beyond the distal groove ends of the second grooves 22 will be splattered, in a large amount, to the axially outer region where there are no rollers 4, instead of being supplied into the regions (pockets 7) in which the rollers 4 are disposed. However, with the second grooves 22 in the present embodiment, the grease is restrained from being splattered, and thus, the grease is effectively supplied into the regions (pockets 7) where the rollers 4 are disposed.

The third grooves 23 are grooves that are formed in the inner peripheral face 12 of the annular portion 10, that are communicated with the first groove 13, and that are extended to the back side 14 (the other side face) of the annular portion 10. The third grooves 23 are extended from the first grooves 13 up to the back side 14, and are opened at the back side 14. With the formation of the third grooves 23, the grease retained in the first groove 13 is gradually supplied to the back side 14 of the annular portion 10 under the rotation of the cage 5. That is, the third grooves 23 have a function of introducing the grease to the back side 14.

The second grooves 22 and the third grooves 23 are formed at the same intervals in the circumferential direction, and are grooves formed along imaginary straight lines that are parallel to the central axis of the cage 5. Thus, each of the second grooves 22 and a corresponding one of the third grooves 23 define a continuous groove that is formed along a corresponding one of the imaginary lines.

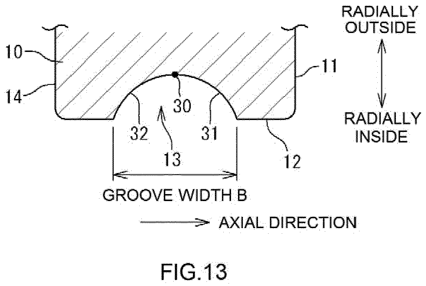

FIG. 13 is an explanatory view for explaining the sectional shape (cross-sectional shape) of the first groove 13. The cross-sectional shape of the first groove 13 illustrated in FIG. 13 is a circular arc shape with a constant radius. The first groove 13 has a groove width B (the size of the first groove 13 in the axial direction of the cage 5) that is greatest at its opening end, which is a radially innermost portion, and that is gradually decreased along a direction from the opening end toward the radially outside. That is, the sectional shape of the first groove 13 has the groove width B that becomes smaller along a direction toward a groove bottom portion 30 of the first groove 13. The groove bottom portion 30 is located at a radially outermost position in the first groove 13. In an example illustrated in FIG. 13, the groove bottom portion 30 extends continuously in the circumferential direction. The first groove 13 has a sectional shape that is uniform along the groove longitudinal direction (circumferential direction).

The first groove 13 has groove side faces 31, 32 that extend from the groove bottom portion 30 such that the distance between the groove side faces 31, 32 increases along a direction toward the radially inside. The groove side faces 31, 32 are extended from the groove bottom portion 30, and located on the opposite sides of the first groove 13 in the groove width direction. In the cross-sectional shape of the first groove 13, faces that are located radially inward of the groove bottom portion 30 are formed in the inner peripheral face 12 of the annular portion 10, at positions on the opposite sides of the first groove 13 in the groove width direction. Thus, even if the rotation of the cage 5 is abruptly accelerated, the grease retained in the first groove 13 surrounded by the groove bottom portion 30 and the groove side faces 31, 32 on the opposite sides of the groove bottom portion 30 is restrained from being splattered from the first groove 13, by the groove side faces 31, 32. Thus, it is possible to reduce the occurrence of a shortage of the grease at an early stage. Moreover, the grease retained in the first groove 13 is allowed to gradually come out onto the faces within the inner peripheral face 12, which are on the opposite sides of the first groove 13, along the groove side faces 31, 32 as the cage 5 is rotated, and the grease that has come onto these faces is supplied toward the front side 11 (the one side face) and the back side 14 (the other side face) of the annular portion 10.

The sectional shape of each second groove 22 (refer to FIG. 10) is the same as that of the first groove 13 at a portion where the second groove 22 meets the first groove 13, but the groove depth and the groove width of the second groove 22 are decreased toward its distal groove end. The sectional shape of each third groove 23 is the same as that of the first groove 13 and is uniform along the groove longitudinal direction (axial direction).

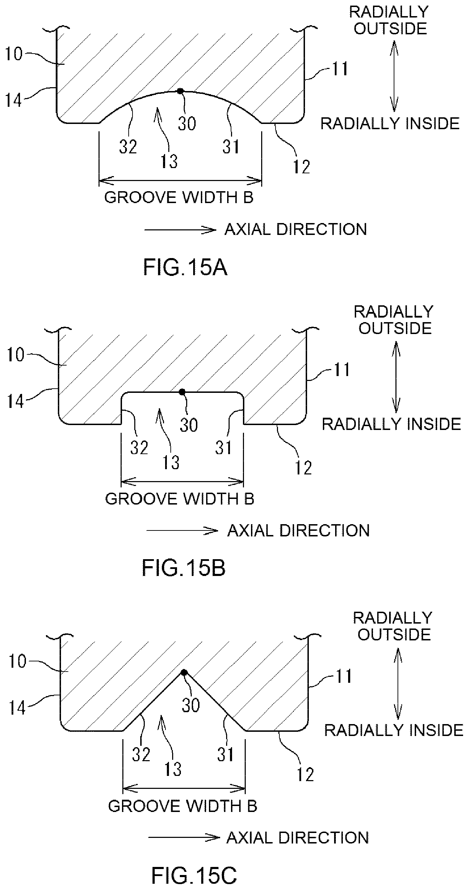

FIG. 15A, FIG. 15B and FIG. 151C are explanatory views illustrating other examples of the first groove 13. The sectional shape of a first groove 13 illustrated in FIG. 15A has a groove depth that is less than that illustrated in FIG. 13. With the first groove 13 illustrated in FIG. 15A, the grease retaining performance is lower, but the grease is more easily supplied onto the front side 11 and the back side 14, as compared with the first groove 13 illustrated in FIG. 13.

A first groove 13 illustrated in FIG. 15B has a linear groove bottom portion 30 in a groove section (cross-section). That is, a groove bottom portion 30 of the first groove 13 has a cylindrical groove bottom face. Further, groove side faces 31, 32 are formed on the opposite sides of the groove bottom portion 30 in the groove width direction. The groove side faces 31, 32 are formed in an annular shape, and formed so as to extend radially inward from the groove bottom portion 30.

The sectional shape of a first groove 13 illustrated in FIG. 15C has a generally triangular shape of which the vertex coincides with a groove bottom portion 30. In a groove section (cross-section), the groove bottom portion 30 is a recess having a small circular arc portion that projects radially outward. Groove side faces 31, 32 are formed on the opposite sides of the groove bottom portion 30 in the groove width direction. The groove side faces 31, 32 are formed so as to extend radially inward from the groove bottom portion 30 such that the distance between the groove side faces 31, 32 increases in a direction toward the radially inside.

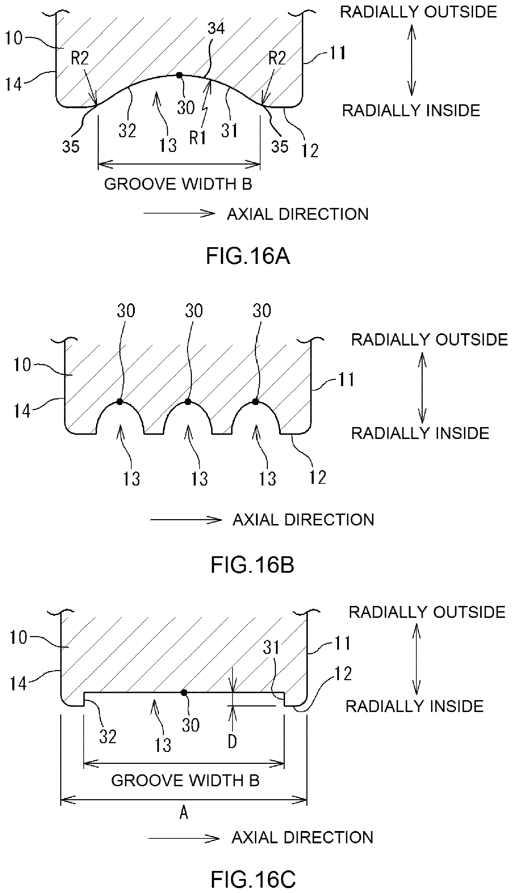

FIG. 16A, FIG. 16B and FIG. 16C are explanatory views illustrating other examples of the first groove 13. The sectional shape of a first groove 13 illustrated in FIG. 16A has a composite circular arc shape. That is, a section of the first groove 13 includes a first circular arc portion 34 and second circular arc portions 35. The first circular arc portion 34 has a radius R1. The second circular arc portions 35 are formed on the opposite sides of the first circular arc portion 34 in the groove width direction, and each have a radius R2 that differs from the radius R1. The second circular arc portions 35 are smoothly connected to the first circular arc portion 34. The second circular arc portions 35 are smoothly connected to the inner peripheral face 12 of the annular portion 10. A groove bottom portion 30 is formed of a radially outermost portion of the first circular arc portion 34. Groove side faces 31, 32 are formed on the opposite sides of the groove bottom portion 30 in the groove width direction. The groove side faces 31, 32 are formed so as to extend radially inward from the groove bottom portion 30 such that the distance between the groove side faces 31, 32 increases toward the radially inside. Each of the groove side faces 31, 32 includes part of the first circular arc portion 34 (except the groove bottom portion 30) and a corresponding one of the second circular arc portions 35.

Multiple (three in an example illustrated in FIG. 9B) first grooves 13 are formed in the inner peripheral face 12 of the annular portion 10 illustrated in FIG. 16B. Although the sectional shape of each of the first grooves 13 is different from that of the first groove 13 illustrated in FIG. 13 (the length of each first groove 13 illustrated in FIG. 16B in the axial direction of the cage 5 is shorter than that of the first groove 13 illustrated in FIG. 13), each of the first grooves 13 has a configuration and a function similar to those of the first groove 13 illustrated in FIG. 13. In the example illustrated in FIG. 16B, the three first grooves 13 have the same sectional shape. However, the first grooves 13 may have sectional shapes that are different from each other.

A first groove 13 illustrated in FIG. 16C has a groove width B larger than that of, for example, the first groove 13 illustrated FIG. 13. The ratio (B/A) of the groove width B to a size A of the inner peripheral face 12 of the annular portion 10 in the axial direction is set to be equal to or larger than 0.7 and equal to or smaller than 0.9. Further, the first groove 13 illustrated in FIG. 16C has a groove depth D smaller than that of the first groove 13 illustrated in FIG. 13. Further, the first groove 13 illustrated in FIG. 16C, as well as the first groove 13 illustrated in FIG. 15B, has a groove bottom portion 30 having a linear shape in a groove section (cross-section). That is, the groove bottom portion 30 of the first groove 13 has a cylindrical groove bottom face.

When the second grooves 22 are formed in the cage inner face 9 of the cage 5 in addition to the first groove 13 illustrated in any one of FIG. 15A to FIG. 15C and FIG. 16A to FIG. 16C and formed in the cage inner face 9, the sectional shape of each second groove 22 is the same as that of the first groove 13 at a portion where the second groove 22 meets the first groove 13, but the groove depth and the groove width of the second groove 22 are decreased toward its distal groove end. The sectional shape of each second groove 22 may be different from that of the first groove 13. For example, the sectional shape of each second groove 22 may be the same as that of the second groove 22 illustrated in FIG. 10. When the third grooves 23 are formed in the cage inner face 9 of the cage 5 in addition to the first groove 13 illustrated in any one of FIG. 15A to FIG. 15C and FIG. 16A to FIG. 16C and formed in the cage inner face 9, the sectional shape of each third groove 23 is the same as that of the first groove 13 and is uniform along the groove longitudinal direction (axial direction). Alternatively, the sectional shape of each third groove 23 may be different from that of the first groove 13. For example, the sectional shape of each third groove 23 may be the same as that of each second groove 22 illustrated in FIG. 10.

In the sectional shape of each of the first grooves 13 illustrated in FIG. 15B and FIG. 16C, the groove width B at the groove bottom portion 30 is equal to the groove width B at the opening end on the radially inside. In the sectional shape of each of the first grooves 13 in FIG. 13, FIG. 15A, FIG. 15C, FIG. 16A, and FIG. 16B, the groove width B is increased along the direction from the groove bottom portion 30 toward the radially inside. Thus, the grease is retained in the grooves, and, in addition, the grease retained in the grooves gradually flows to the cage inner face 9 along the groove side faces 31, 32 due to a centrifugal force under the rotation of the cage 5. Further, the grease is supplied onto the back side 14 of the annular portion 10 and into the pockets 7. Thus, the grease contributes to the lubrication of the double row roller bearing 1.

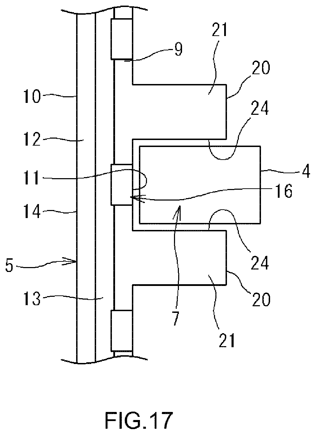

In the embodiment described above (refer to FIG. 9), the first groove 13, the second grooves 22 and the third grooves 23 are formed in the cage inner face 9. In another example of the cage 5, only the first groove 13 is formed in the cage inner face 9 as illustrated in FIG. 17. That is, the first groove 13 extending in the circumferential direction is formed in the inner peripheral face 12 of the annular portion 10. FIG. 17 is a planar development view of the annular cage 5, schematically illustrating the cage inner face 9. The first groove 13 illustrated in FIG. 17 has the same configuration as that of the first groove 13 illustrated in FIG. 9. Therefore, the detailed description of the first groove 13 will be omitted.

In the cage 5 in this example as well, the grease is retained in the first groove 13 formed in the inner peripheral face 12 of the annular portion 10. The grease retained in the first groove 13 is gradually supplied toward both the front side 11 and the back side 14 (the other side face) of the annular portion 10 under the rotation of the cage 5.

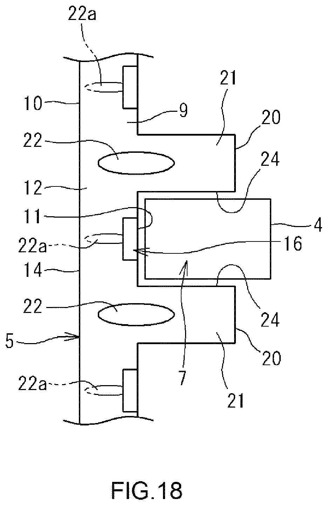

In the cage 5 in yet another example, only the second grooves 22 are formed in the cage inner face 9 as illustrated in FIG. 18. That is, the second groove 22 is formed in the radially inner face 21 of each of the cage bars 20 so as to extend in the direction in which the cage bar 20 is extended. The second grooves 22 illustrated in FIG. 18 have a configuration that is substantially the same as that of the second grooves 22 illustrated in FIG. 9. Therefore, the detailed description of the second grooves 22 will be omitted. However, one end portion of each of the second grooves 22 in the groove longitudinal direction (left end portion) is not opened at the back side 14 as illustrated in FIG. 18, and is present within the inner peripheral face 12 of the annular portion 10.

In the cage 5 in this example as well, the grease is retained in the second grooves 22 formed in the radially inner faces 21 of the cage bars 20. The grease retained in the second grooves 22 is supplied into spaces defined between the cage bars 20 and the rollers 4 that are adjacent to the cage bars 20 in the circumferential direction under the rotation of the cage 5.

Although not illustrated, only the first groove 13 and the second grooves 22 may be formed in the cage inner face 9. Further, as indicated by long dashed double-short dashed lines in FIG. 18, grooves 22a (similar to the second grooves 22), each extending in a direction along an imaginary straight line that is parallel to the central axis of the cage 5, may be formed in the inner peripheral face 12 of the annular portion 10, in addition to the second grooves 22 or instead of the second grooves 22.

In each of the cages 5 in the above-described embodiments, the recesses 16 that are opened toward the end faces 4a of the rollers 4 are formed in the face 15 (front side 11) opposed to the end faces 4a of the rollers 4 disposed in the pockets 7. Due to the recesses 16, the grease is retained in the spaces between the recesses 16 and the end faces 4a of the rollers 4. Further, because the recesses 16 are opened at the inner peripheral face 12 of the annular portion 10, the grease present on the inner peripheral face 12 is introduced into the recesses 16. In particular, in each of the embodiments, because the first groove 13 is formed in the inner peripheral face 12 of the annular portion 10, the grease is retained in the first groove 13. Further, because the recesses 16 are communicated with the first groove 13, the grease retained in the first groove 13 is introduced into the recesses 16.

By introducing the grease present on the inner peripheral face 12 of the annular portion 10 into the recesses 16, the grease is stably retained between the end faces 4a of the rollers 4 and the face 15 (front side 11) of the cage 5. As a result, it is possible to reduce the occurrence of a grease shortage at an early stage in the double row roller bearing 1. Thus, it is possible to prevent reduction in the service life of the double row roller bearing 1 due to a shortage of the grease.

Further, the bottom face 17 (refer to FIG. 12) of each of the recesses 16 is an inclined face that approaches the end face 4a of a corresponding one of the rollers 4 along the direction from the radially inside to the radially outside. Thus, the grease on the inner peripheral face of the annular portion 10 is introduced radially outward within the recess 16 along the bottom face 17 by a centrifugal force under the rotation of the cage 5. Thus, the grease is efficiently supplied to the space between the recess 16 and the end face 4a of the roller 4.

The outer wall face 18 is formed at a radially outer side portion within the recess 16. Thus, the outer wall face 18 restrains the grease retained in the recess 16 from being excessively discharged from the recess 16 by a centrifugal force under the rotation of the cage 5. Thus, it is possible to enhance the grease retaining performance of the recess 16.

Because the cage 5 in each of the embodiments is made of resin, the rotational resistance of the cage 5 is lower than that of a cage made of metal (for example, brass). Therefore, the cage 5 generates lower noise, and is capable of withstanding higher-speed rotation. Some cages are made of brass (copper alloy). In particular, when a cage made of brass is used under high-speed rotation, for example, the inner peripheral face, the outer peripheral face, the pocket walls of the cage abrade due to the contact with the inner ring, the outer ring and the rollers, and as a result, abrasion powder is generated. If the abrasion powder is mixed into the grease for lubricating a double row roller bearing, the lubrication performance of the grease is reduced, which raises a possibility that seizure or damages of the double row roller bearing will occur. However, because the cage 5 in each of the embodiments is made of resin, it is possible to prevent reduction of the lubrication performance of the grease due to the abrasion powder as described above. That is, the cage 5 made of resin is more suitable for the use under high-speed rotation than a resin made of brass.

Because the prong type cage 5 has a cantilever structure in which the cage bars 20 are projected from the annular portion 10 in the axial direction, the distal end portions of the cage bars 20 are deformable to some extent. Thus, for example, even if rolling of the rollers 4 fails to keep up with the rotation of the double row roller bearing 1 and thus tensile force and compression force repeatedly act on the cage 5, these forces are relieved. Therefore, the cage 5 is less prone to damages.

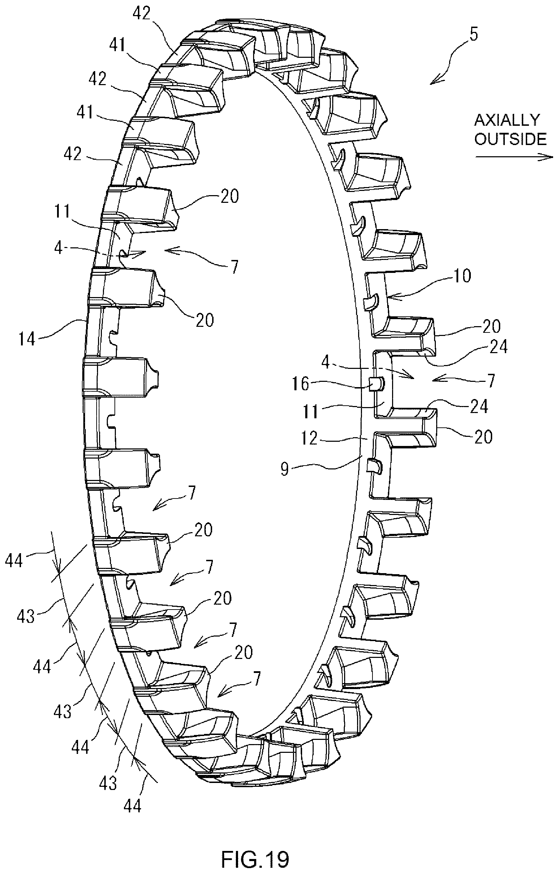

The double row roller bearing and the cage according to the invention are not limited to the embodiments illustrated the drawings. The invention may be implemented in various other embodiments within the scope of the invention. For example, the bottom face 17 of each of the recesses 16 is an inclined face in the above-described embodiments. However, the bottom face 17 may be a stepped face, or a flat face that is parallel to the front side 11. In the above-described embodiments, the cage 5 has the second grooves 22 and the third grooves 23 in addition to the first groove 13. However, the first groove 13, the second grooves 22 and the third grooves 23 may be omitted, as illustrated in FIG. 19. In this case, the recesses 16 are opened at the smooth inner peripheral face 12 of the annular portion 10, and thus the grease present on the inner peripheral face 12 is introduced into the recesses 16. The shape and the function of the recesses 16 are the same as those described in the above-described embodiments, and therefore the detailed description thereof will be omitted. When the first groove 13 is formed, the first groove 13 may be non-continuous (intermittent) grooves instead of a groove that is continuous in the circumferential direction. Further, the double row roller bearing 1 may be used for a purpose other than support of the main spindle 6 of the machine tool.

In the above-described embodiments, the recesses 16 are formed in the one side face of the annular portion 10 and the grooves (13, 22, 23) are formed in the cage inner face 9 (refer to FIG. 9), or the recesses 16 are formed in the one side face of the annular portion 10 but no grooves (13, 22, 23) are formed in the cage inner face 9 (refer to FIG. 19). Alternatively, the invention may be applied to a cage 5 in which the grooves (13, 22, 23) are formed but no recesses 16 are formed.

With the prong type cage according to the invention and the double row roller bearing including the prong type cage, by introducing the grease retained in the recessed portions formed on the outer periphery of the annular portion into the space between the protrusions formed on the outer periphery of the annular portion and the inner peripheral face of the outer ring, the rotational resistance between the prong type cage and the outer ring is reduced and thus the cage is usable under a high-speed rotation. By retaining the grease in the recessed portions, it is possible to reduce the occurrence of a grease shortage at an early stage in the double row roller bearing.

## Claims

1. A double row roller bearing comprising:
an inner ring (2);
an outer ring (3);
a plurality of rollers (4) arranged in two rows between the inner ring (2) and the outer ring(3); and
two independent cages (5) each of which holds the rollers (4) arranged in a corresponding one of the rows, and that are rotatable independently from each other, wherein
each of the cages (5) is a prong type cage (5) having an annular portion (10) and a plurality of cage bars (20) extended in an axial direction of the prong type cage (5) from one side face (11) of the annular portion (10), and located at intervals in a circumferential direction of the prong type cage (5),
pockets (7) in which the rollers (4) are held are defined at positions on a side of the one side face (11) of the annular portion (10) and between the cage bars (20) adjacent to each other in the circumferential direction, and
a plurality of protrusions (41) each of which is opposed to an inner peripheral face (3c) of the outer ring (3) across a clearance and guided by the inner peripheral face (3c) of the outer ring (3), and a plurality of recessed portions (42) that retain grease between the recessed portions (42) and the inner peripheral face (3c) of the outer ring (3) are formed on an outer periphery of the annular portion (10) so as to be arranged in the circumferential direction, wherein each of the protrusions (41) opposed to the inner peripheral face (3c) of the outer ring (3) across the clearances has a radially outer face (45) having a circular arc face (46) formed such that a radial clearance between the circular arc face (46) and the inner peripheral face (3c) of the outer ring (3) is uniform along the circumferential direction, and a small-diameter face (47) extended from a circumferential end portion of the circular arc face (46) in the circumferential direction and formed such that a radial clearance between the small-diameter face (47) and the inner peripheral face (3c) of the outer ring (3) increases along a direction in which the small-diameter face (47) extends wherein:
each of the annular portions (10) of the two prong type cages (5) is formed of a plurality of first circular arc portions (43) connected to the respective cage bars (20), and a plurality of second circular arc portions (40) located between the first circular arc portions (43) that are adjacent to each other in the circumferential direction;
the protrusions (41) are formed on outer peripheral sides of the first circular arc portions (43), and the recessed portions (42) are formed on outer peripheral sides of the second circular arc portions (44); and
the other side face (14) of the annular portion (10) of one of the two prong type cages (5) serves as a sliding contact face that is brought into sliding contact with the other side face (14) of the annular portion (10) of the other one of the two prong type cages (5).

2. The the double row roller bearing according to claim 1, wherein:
the annular portion (10) is formed of a plurality of first circular arc portions (43) connected to the respective cage bars (20), and a plurality of second circular arc portions (44) located between the first circular arc portions (43) that are adjacent to each other in the circumferential direction; and
the protrusions (41) are formed on outer peripheral sides of the first circular arc portions (43), and the recessed portions (42) are formed on outer peripheral sides of the second circular arc portions (44).

3. The double row roller bearing according to claim 1 or 2, wherein:
the protrusions (41) and the recessed portions (42) are alternately arranged along the circumferential direction; and
each of the protrusions (41) has an axial length equal to or greater than an axial length of the annular portion (10).

## Patentansprüche

1. Zweireihiges Wälzlager mit:
einem Innenring (2);
einem Außenring (3);
einer Vielzahl von Rollen (4), die zwischen dem Innenring (2) und dem Außenring (3) in zwei Reihen angeordnet sind; und
zwei unabhängigen Käfigen (5), von denen jeder die Rollen (4) so hält, dass sie in einer entsprechenden der Reihen angeordnet sind, und die unabhängig voneinander drehbar sind, wobei
jeder der Käfige (5) ein Kammkäfig (5) ist, welcher einen ringförmigen Abschnitt (10) und eine Vielzahl von Käfigstegen (20) aufweist, die sich in einer Axialrichtung des Kammkäfigs (5) von einer Seitenfläche (11) des ringförmigen Abschnitts (10) erstrecken und in einer Umfangsrichtung des Kammkäfigs (5) in Intervallen angeordnet sind,
Aussparungen (7), in welchen die Rollen (4) gehalten sind, an Positionen auf einer Seite der einen Seitenfläche (11) des ringförmigen Abschnitts (10) definiert und in der Umfangsrichtung zwischen den Käfigstegen (20) aneinander angrenzend angeordnet sind, und
eine Vielzahl von Überständen (41), von denen jeder gegenüber einer Innenumfangsfläche (3c) des Außenrings (3) über ein Spiel angeordnet und von der Innenumfangsfläche (3c) des Außenrings (3) geführt ist, und eine Vielzahl von ausgesparten Abschnitten (42), die Schmiermittel zwischen den ausgesparten Abschnitten (42) und der Innenumfangsfläche (3c) des Außenrings (3) zurückhalten, auf einem Außenumfang des ringförmigen Abschnitts (10) derart ausgebildet sind, dass sie in der Umfangsrichtung angeordnet sind, wobei jeder der gegenüber der Innenumfangsfläche (3c) des Außenrings (3) mit Spiel angeordneten Überstände (41) eine radial äußere Fläche (45), welche eine kreisförmige Bogenfläche (46) aufweist, die derart ausgebildet ist, dass ein radiales Spiel zwischen der kreisförmigen Bogenfläche (46) und der Innenumfangsfläche (3c) des Außenrings (3) entlang der Umfangsrichtung gleichförmig ist, und eine Fläche mit kleinem Durchmesser (47) aufweist, die sich von einem Umfangsendabschnitt der kreisförmigen Bogenfläche (46) in der Umfangsrichtung erstreckt und derart ausgebildet ist, dass ein radiales Spiel zwischen der Fläche mit kleinem Durchmesser (47) und der Innenumfangsfläche (3c) des Außenrings (3) entlang einer Richtung zunimmt, in welcher sich die Fläche mit kleinem Durchmesser (47) erstreckt, wobei:
jeder der ringförmigen Abschnitte (10) der zwei Kammkäfige (5) aus einer Vielzahl von ersten kreisförmigen Bogenabschnitten (43), welche mit den jeweiligen Käfigstegen (20) verbunden sind, und einer Vielzahl von zweiten kreisförmigen Bogenabschnitten (40) gebildet ist, welche zwischen den ersten kreisförmigen Bogenabschnitten (43) angeordnet sind, die in der Umfangsrichtung aneinander angrenzend angeordnet sind;
die Überstände (41) auf Außenumfangsseiten der ersten kreisförmigen Bogenabschnitte (43), und die ausgesparten Abschnitte (42) auf Außenumfangsseiten der zweiten kreisförmigen Bogenabschnitte (44) gebildet sind; und
die andere Seitenfläche (14) des ringförmigen Abschnitts (10) eines der zwei Kammkäfige (5) als eine Gleitkontaktfläche fungiert, welche mit der anderen Seitenfläche (14) des ringförmigen Abschnitts (10) des anderen der zwei Kammkäfige (5) in Gleitkontakt gebracht ist.

2. Zweireihiges Wälzlager nach Anspruch 1, wobei:
der ringförmige Abschnitt (10) aus einer Vielzahl von ersten kreisförmigen Bogenabschnitten (43), welche mit den jeweiligen Käfigstegen (20) verbunden sind, und einer Vielzahl von zweiten kreisförmigen Bogenabschnitten (44) gebildet ist, welche zwischen den ersten kreisförmigen Bogenabschnitten (43) angeordnet sind, die in der Umfangsrichtung aneinander angrenzend angeordnet sind; und
die Überstände (41) auf Außenumfangsseiten der ersten kreisförmigen Bogenabschnitte (43), und die ausgesparten Abschnitte (42) auf Außenumfangsseiten der zweiten kreisförmigen Bogenabschnitte (44) gebildet sind.

3. Zweireihiges Wälzlager nach Anspruch 1 oder 2, wobei:
die Überstände (41) und die ausgesparten Abschnitte (42) entlang der Umfangsrichtung abwechselnd angeordnet sind; und
jeder der Überstände (41) eine Axiallänge aufweist, die gleich oder größer als eine Axiallänge des ringförmigen Abschnitts (10) ist.

## Revendications

1. Roulement à double rangée de rouleaux comprenant :
un anneau interne (2) ;
un anneau externe (3) ;
plusieurs rouleaux (4) disposés dans deux rangées entre l'anneau interne (2) et l'anneau externe (3) ; et
deux cages indépendantes (5) dont chacune supporte les rouleaux (4) disposés dans une correspondante des rangées, et qui peuvent tourner indépendamment l'une de l'autre, où
chacune des cages (5) est une cage de type dent (5) ayant une portion annulaire (10) et plusieurs barres de cage (20) étendues dans une direction axiale de la cage de type dent (5) à partir d'une face latérale (11) de la portion annulaire (10), et disposées à des intervalles dans une direction circonférentielle de la cage de type dent (5),
des poches (7) dans lesquelles les rouleaux (4) sont maintenus sont définies à des positions sur un côté de la une face latérale (11) de la portion annulaire (10) et entre les barres de cage (20) adjacentes les unes aux autres dans la direction circonférentielle, et
plusieurs protubérances (41) dont chacune est opposée à une face de périphérie interne (3c) de l'anneau externe (3) à travers un espacement et guidée par la face de périphérie interne (3c) de l'anneau externe (3), et plusieurs portions en creux (42) qui retiennent de la graisse entre les portions en creux (42) et la face de périphérie interne (3c) de l'anneau externe (3) sont formées sur une périphérie externe de la portion annulaire (10) afin d'être disposées dans la direction circonférentielle, où chacune des protubérances (41) opposées à la face de périphérie interne (3c) de l'anneau externe (3) à travers les espacements présente une face radialement externe (45) ayant une face d'arc circulaire (46) formée de sorte qu'un espacement radial entre la face d'arc circulaire (46) et la face de périphérie interne (3c) de l'anneau externe (3) est uniforme le long de la direction circonférentielle, et une face de petit diamètre (47) étendue à partir d'une portion d'extrémité circonférentielle de la face d'arc circulaire (46) dans la direction circonférentielle est formée de sorte qu'un espacement radial entre la face de petit diamètre (47) et la face de périphérie interne (3c) de l'anneau externe (3) augmente le long d'une direction dans laquelle la face de petit diamètre (47) s'étend où :
chacune des portions annulaires (10) des deux cages de type dent (5) est formée de plusieurs premières portions d'arc circulaire (43) connectées aux barres de cage respectives (20), et de plusieurs secondes portions d'arc circulaire (40) disposées entre les premières portions d'arc circulaire (43) qui sont adjacentes les unes aux autres dans la direction circonférentielle ;
les protubérances (41) sont formées sur des côtés de périphéries externes des premières portions d'arc circulaire (43), et les portions en creux (42) sont formées sur des côtés de périphéries externes des secondes portions d'arc circulaire (44) ; et
l'autre face latérale (14) de la portion annulaire (10) d'une des deux cages de type dent (5) sert de face de contact de glissement qui est mise en contact de glissement avec l'autre face latérale (14) de la portion annulaire (10) de l'autre des deux cages de type dent (5).

2. Roulement à double rangée de rouleaux selon la revendication 1, où :
la portion annulaire (10) est formée de plusieurs premières portions d'arc circulaire (43) connectées aux barres de cage respectives (20), et de plusieurs secondes portions d'arc circulaire (44) disposées entre les premières portions d'arc circulaire (43) qui sont adjacentes les unes aux autres dans la direction circonférentielle ; et
les protubérances (41) sont formées sur des côtés de périphéries externes des premières portions d'arc circulaire (43), et les portions en creux (42) sont formées sur des côtés de périphéries externes des secondes portions d'arc circulaire (44).

3. Roulement à double rangée de rouleaux selon la revendication 1 ou 2, où :
les protubérances (41) et les portions en creux (42) sont disposées de manière alternée le long de la direction circonférentielle ; et
chacune des protubérances (41) présente une longueur axiale supérieure ou égale à une longueur axiale de la portion annulaire (10).
